# EUROPEAN PATENT SPECIFICATION

(11) **EP 3 666 112 B1**
(45) Date of publication and mention of the grant of the patent: **25.08.2021**
(21) Application number: 18212753.0
(22) Date of filing: 14.12.2018
(51) Int. Cl.: A45C 5/02, A45C 13/36, A45C 5/03

(54) **HARDSIDE LUGGAGE ARTICLE AND METHOD OF MANUFACTURING**
HARTGEPÄCKARTIKEL UND HERSTELLUNGSVERFAHREN
ARTICLE DE BAGAGE RIGIDE ET PROCÉDÉ DE FABRICATION

(43) Date of publication of application: 17.06.2020
(73) Proprietor: Samsonite IP Holdings S.à r.l., 1931 Luxembourg (LU)
(72) Inventor: HILLAERT, Rik, 9700 Oudenaarde (BE); KOSLOWSKI, Pauline M., 2600 Berchem (BE); GODEFROID, Wim, 9688 Schorisse (BE); DE VOS, Wim, 9750 Zingem (BE)
(74) Representative: Lloyd, Robin Jonathan

(56) References cited:
- EP-A1- 3 159 153
- US-A1- 2014 311 847
- US-A1- 2016 278 492

## Description

### TECHNICAL FIELD

The present disclosure relates generally to luggage articles, and more specifically to hardside luggage articles and the method of producing the same.

### BACKGROUND

Traditional hardside luggage cases are constructed from generally hard materials. Hard materials provide the desired structural strength and rigidity, but do not provide desired wear or abrasion resistance. For instance, traditional hardside luggage case construction may exhibit wear, such as scratching, when the luggage case is handled in the normal course, such when used during travel, or in luggage handling equipment used at airport.

It is therefore desirable to provide an improved luggage case that addresses one or all of the above-described problems and/or which more generally offers improvements or an alternative to existing arrangements.

Documents that may be related to the present disclosure include CN101578017A, CN102765234A, CN103407165B, CN106218146A, EP0306923A2, EP0651013B1, EP1480804A1, EP2161125B1, EP3148763A1, and EP3187066A1. US2016/278492, in accordance with its abstract, describes a storage device, in particular a piece of baggage or a wallet, having at least one outer surface in which it is provided that an additional outer layer is provided on the outer surface, said layer having at least one three-dimensional protrusion formed therein by a thermoforming process and protruding from the outer surface.

### SUMMARY

The present disclosure provides a hardside luggage article and its method of manufacture. The luggage article includes a hardside luggage case shell component including a different (softer) material bonded, adhered, or molded to an outer surface of a substrate layer of a shell component to provide increased scratch or wear resistance to the shell component. To provide even greater scratch or wear resistance, the outer material protrudes away from (proud to) the exterior surface of the shell component. In this manner, the outer material layer may reduce the abrasive effects to the appearance caused by use of the luggage, or luggage handling equipment. The outer material layer provides an impact-absorbing sacrificial layer that resists abrasion as well as reducing contact between the outer surface of the substrate layer, which limits abrasion of or other damage to a substrate layer of the luggage shell component. The outer material layer may be bonded, adhered, or molded to the substrate layer by a carrier film positioned between the substrate layer and the outer material. The luggage shell component may be manufactured by separately molding the outer material layer on the carrier film, and then securing the carrier film to the substrate layer. The outer material layer may be formed in one or more patterns of features. The features may be one or more ribs, strips, protrusions, or the like. The layout of the features may form the pattern. The pattern of features may create a surface profile extending outwardly from the exterior surface of the shell component.

According to the invention, there is provided a hardside luggage article, comprising the features of claim 1. The luggage article includes a first shell component formed at least in part by a lamina. The lamina includes a substrate layer, a carrier film, and a material layer affixed to the substrate layer via the carrier film. The substrate layer defines a surface and a first material property. The carrier film has opposing first and second surfaces. The first surface of the carrier film is affixed to the surface of the substrate layer. The material layer is affixed to the second surface of the carrier film. The material layer defines a second material property. The second material property is different than the first material property. The material layer forms at least one feature protruding away from the surface of the substrate layer.

Optionally, the first and second material properties may be abrasion resistances or hardness levels of the respective layers. The material layer may have an abrasion resistance greater than the abrasion resistance of the substrate layer.

Optionally, the material layer may be formed as a solid sheet or at least one individual feature. The individual features or solid sheet may be formed on between 25% and 75% of the exterior surface area of the first shell component. A plurality of individual features may form a pattern. Each individual feature may be a rib. Each rib may have a width, height, and length. The individual features may abut a field defined by the carrier film.

Optionally, the substrate layer may include polypropylene. The material layer may include a thermoset polyurethane.

Optionally, each of the substrate layer and the material layer may define at least one thickness dimension. The at least one thickness dimension of the substrate layer may be greater than the at least one thickness dimension of the material layer. The thickness dimension of the substrate layer may be between 2 and 4 times the thickness dimension of the material layer.

Optionally, the carrier film may include first and second layers bonded together to affix to the substrate layer and the material layer, respectively. The first layer may be formed from a polypropylene material. The second layer may be formed from a polyurethane material.

The carrier film includes a coating or treatment improving adhesion of the carrier film to at least one of the substrate layer and the material layer.

Optionally, the material layer may account for between 5% and 15% of the total weight of the first shell component.

Optionally, the first shell component may define a height dimension of between 55cm and 81cm.

Optionally, the first shell component may include a major face and a sidewall extending from a peripheral boundary of the major face. The sidewall may define at least a portion of at least one of a top face, a bottom face, a left side face, and a right side face of the luggage article. The material layer may extend along at least a portion of the major face. The material layer may extend along at least a portion of the sidewall. The material layer may extend along at least a portion of each of the left and right side faces of the first shell component. The major face may include a center portion extending between the top and bottom faces. The center portion may have an outer boundary. The material layer may extend from the outer boundary of the center portion to the peripheral boundary of the major face. A first centerline may be defined along the major face between the top and bottom faces. The outer boundary of the center portion of the major face may be defined by first and second boundary lines. The first boundary line may extend along a position between the first centerline and the left side face. The second boundary line may extend along a position between the first centerline and the right side face. At least portions of the first and second boundary lines may extend parallel to the first centerline.

Optionally, the luggage article may include a second shell component pivotably connected to the first shell component at a split line. The second shell component may be configured according to any example of the first shell component.

A method of producing a luggage shell component for a hardside luggage article may include molding a material to one surface of a carrier film to form a feature, the material defining a material layer and having a first material property. The method may include affixing the material layer to a substrate layer by affixing an opposing surface of the carrier film to the substrate layer. The substrate layer may have a second material property different than the first material property of the outer material layer. The material layer may protrude away from the substrate layer.

Optionally, the first and second material properties may be abrasion resistances or hardness levels of the respective layers. The abrasion resistance of the material layer may be greater than the abrasion resistance of the substrate layer.

Optionally, the material layer may be injection molded onto the carrier film within a first mold. The first mold may be a flat molding such that the material layer is molded to the carrier film in a flat configuration.

Optionally, the material layer may be formed in a pattern of a plurality of individual features. The plurality of individual features may include at least one rib. The plurality of individual features may include at least one planar shape.

Optionally, the substrate layer may be molded to the carrier film within a second mold.

Optionally, affixing the material layer to the substrate layer may include placing the carrier film and material layer within a cavity of a female mold housing. The carrier film and material layer may be positioned against a surface of the cavity of the female mold housing as a portion of the mold surface. A male mold housing may be positioned at least partially within the cavity of the female mold housing to define a space between the female and male mold housings corresponding to a thickness of the substrate layer. A material may be injected within the space between the female and male mold housings to form at least a portion of the substrate layer. The female mold housing may include grooves corresponding to at least a portion of the pattern of the material layer formed on the carrier film. The material layer may be positioned at least partially into the grooves defined in the female mold housing. The method may include holding at least one of the carrier film and the outer material layer against at least a portion of the surface of the cavity of the female mold housing by a vacuum force.

Optionally, the material layer may be a thermoset polyurethane material. The substrate layer may include polypropylene. The carrier film may be formed at least partially from a polypropylene material.

Optionally, the method may include attaching the luggage shell component to another shell component to form a luggage article.

Optionally, the carrier film and/or the outer material may be held against the female mold housing using a plurality of vacuum ports or slits.

Optionally, the method may include cutting the carrier film around the molded pattern of the outer material layer.

Optionally, the method may include removing one or more material runners from the molded pattern of the outer material layer.

Additional embodiments and features are set forth in part in the description that follows, and will become apparent to those skilled in the art upon examination of the specification or may be learned by the practice of the disclosed subject matter. A further understanding of the nature and advantages of the present disclosure may be realized by reference to the remaining portions of the specification and the drawings, which forms a part of this disclosure. One of skill in the art will understand that each of the various aspects and features of the disclosure may advantageously be used separately in some instances, or in combination with other aspects and features of the disclosure in other instances, as long as these fall within the scope of the appended claims.

### BRIEF DESCRIPTION OF THE DRAWINGS

The description will be more fully understood with reference to the following figures in which components are not drawn to scale, which are presented as various examples of the present disclosure and should not be construed as a complete recitation of the scope of the disclosure, characterized in that:
FIG. 1 is an isometric view of a luggage article according to some examples of the present disclosure;
FIG. 2 is an isometric view of a luggage shell component according to some examples of the present disclosure;
FIG. 3 is another isometric view of the luggage shell component of FIG. 2;
FIG. 4 is an exploded view of the luggage shell component of FIG. 2 and showing a carrier film and outer material layer affixed to the substrate layer according to some examples of the present disclosure;
FIG. 5A is an enlarged, cross-sectional view of a pattern formed by the outer material according to some examples of the present disclosure;
FIG. 5B is another enlarged, cross-sectional view of the pattern formed by the outer material;
FIG. 6 is an enlarged, cross-sectional view of the carrier film according to some examples of the present disclosure;
FIG. 7 is a flowchart illustrating a method of producing a hardside luggage article according to some examples of the present disclosure;
FIG. 8 is an exploded view of a first mold arrangement according to some examples of the present disclosure;
FIG. 9 is an isometric view of the carrier film positioned within the first mold arrangement according to some examples of the present disclosure;
FIG. 10 is an isometric view of the outer material molded to the carrier film according to some examples of the present disclosure;
FIG. 11 is an isometric view of the carrier film and outer material removed from the first mold arrangement and modified for future processing according to some examples of the present disclosure;
FIG. 12 is an exploded view of a second mold arrangement according to some examples of the present disclosure;
FIG. 13 is an isometric view of the carrier film and outer material positioned within the second mold arrangement according to some examples of the present disclosure; and
FIG. 14 is an isometric view of the luggage shell component formed within the second mold arrangement, with the substrate layer affixed to the carrier film and outer material layer according to some examples of the present disclosure.

### DETAILED DESCRIPTION

According to the present invention, a luggage article is provided that exhibits increased wear or scratch resistance compared to other luggage designs. The luggage article includes a shell component including a shell portion formed by a substrate layer, a carrier film, and an outer material layer affixed to the first shell portion via the carrier film. As described herein, "affixed" means bonded, adhered, molded, etc. to permanently or substantially permanently connect or attach. The shell portion is defined by a substrate layer with an outer surface, the shell portion defining a first hardness level. The carrier film has opposing first and second surfaces. The first surface of the carrier film is affixed to the outer surface of the substrate layer. The outer material layer is affixed to the second surface of the carrier film such that the carrier film connects the outer material layer to the substrate layer. The outer material layer may define a second hardness level. The second hardness level may be softer than the first hardness level. In this manner, the outer material may have a lower hardness level than the shell portion. The outer material layer may cover a selective amount of the outer surface of the substrate layer, such as the entire outer surface of the substrate layer or less than the entirety of the outer surface of the substrate layer. For example, the outer material layer may be formed in one or more patterns of features (e.g., ribs, strips, shapes, protrusions, etc.), with the layout of the features forming the pattern. The outer material layer protrudes outwardly away from the outer surface of the substrate layer to limit damage to a surface of the shell component in the areas adjacent to the location of the outer material layer.

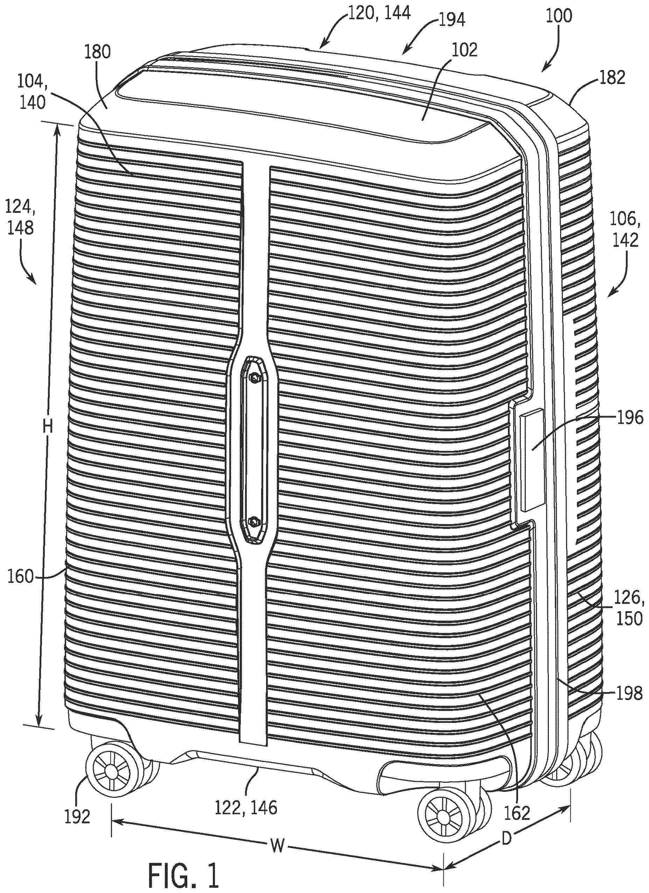

FIG. 1 illustrates an exemplary luggage article 100 according to some examples of the present disclosure. The luggage article 100 includes a housing 102 formed from a plurality of walls or panels (hereinafter "panels" for the sake of convenience without intent to limit) defining an internal storage volume in which to carry a user's belongings. In one example, the housing 102 may be formed from opposing front and rear panels 104, 106 and a plurality of side panels extending between the front and rear panels 104, 106. For instance, the luggage article 100 may include opposing top and bottom panels 120, 122 and opposing left and right side panels 124, 126 extending between the front and rear panels 104, 106. In such examples, the panels may define opposing major faces of the luggage article 100 and a plurality of minor faces extending between the major faces. For instance, the front and rear panels 104, 106 of the housing 102 may define front and rear major faces 140, 142, respectively. Similarly, the top and bottom panels 120, 122 of the housing 102 may define top and bottom minor faces 144, 146, respectively, which may be referred to simply as top and bottom faces. The left and right side panels 124, 126 of the housing 102 may define left and right minor faces 148, 150, respectively, which may be referred to as left and right side faces. As such, any description herein with reference to the various panels may apply to a corresponding face of the housing 102, or vice versa.

With continued reference to FIG. 1, corner regions may be defined by the intersection of any two or three adjacent panels or faces. For example, corners formed by the intersection of any three adjacent panels may be considered a "corner region." In addition, edge regions may be defined by the intersection of any two adjacent panels or faces. For example, a first edge region 160 may be defined by the intersection of the front panel 104 and the left side panel 124. In like manner, a second edge region 162 may be defined by the intersection of the front panel 104 and the right side panel 126. The corner and edge regions may be rounded or square or include other configurations to provide a desired aesthetic and/or functional characteristic.

The various panels may be configured or arranged to provide a desired size and shape of the housing 102. As shown in FIG. 1, the various panels may be sized and shaped to provide a height H, width W, and depth D of the housing 102. The height H of the housing 102 may be defined as the distance between the top and bottom panels 120, 122. The width W of the housing 102 may be defined as the distance between the left and right side panels 124, 126. Similarly, the depth D of the housing 102 may be defined as the distance between the front and rear panels 104, 106. The panels may be sized and shaped such that the luggage article 100 is taller than it is wide and wider than it is deep, such as that shown in at least FIG. 1, though other configurations are contemplated, including configurations that are wider than they are tall or the like. Depending on the particular application, the luggage article 100 may be sized according to conventional luggage case sizes, such as having a size similar to a small cabin suitcase, a large cabin suitcase, an extra-large cabin suitcase, a medium suitcase, a large suitcase, or an extra-large suitcase. More particularly, the luggage article 100 may have a 55cm, a 69cm, a 75cm, or an 81cm size as measured from the ground to the top of the luggage article 100. Other sizes and shapes of the housing 102 are contemplated, and the examples shown and described are for illustration purposes only.

The luggage article 100 illustrated in FIG. 1 is an upright spinner hardside luggage case but may be any type of suitable luggage article, including a hybrid luggage case (e.g. a luggage case having at least a portion formed by a hardside construction), a container, or the like. As shown, the luggage article 100 includes a first shell component 180, which may be referred to as a luggage shell component. In some examples, the luggage article 100 includes a second shell component 182 pivotably connected to the first shell component 180 at a split line. The first and second shell components 180, 182, which may be front and rear shell components or halves, respectively, may be sized similarly to each other, or one of the shell components may be sized to include a larger or smaller internal volume. Though shown as including a second shell component 182, the second shell component 182 may be omitted such that the luggage article 100 includes only a single shell (i.e., the first shell component 180). For example, a lid or other panel or cover may be connected to the first shell component 180, the first shell component 180 may define a complete or substantially complete enclosure, or the like.

In examples including both the first shell component 180 and the second shell component 182, the luggage article 100 may be moved between open and closed configurations. In the closed configuration, the first and second shell components 180, 182 may be positioned adjacent to each other to enclose a user's belongings within the internal storage volume of the luggage article 100. In the open configuration, the first and second shell components 180, 182 may be re-oriented relative to each other to allow user access to the interior of the luggage article 100. To allow selective movement of the first and second shell components 180, 182 between the open and closed configurations, the first and second shell components 180, 182 may be pivotably attached together by a hinge or similar mechanism. In such examples, the first and second shell components 180, 182 may be pivoted about the hinge towards or away from each other to selectively close or open the luggage article 100, respectively.

The luggage article 100 may include otherfeatures for convenience. For example, the luggage article 100 may include one or more support members 192 to support the luggage article 100 against a support surface (e.g., against the ground). The support members 192 may be a foot, a fixed wheel assembly, a spinner wheel assembly, or any combination thereof. Additionally or alternatively, the luggage article 100 may include a retractable tow handle 194 connected to the rear panel 106. The luggage article 100 may also include one or more carry handles 196 connected to at least one of the top panel 120, the bottom panel 122, the left side panel 124, and the right side panel 126 of the housing 102. In some examples, the luggage article 100 may include a closure mechanism 198 to selectively secure the first shell component 180 and the second shell component 182 together. The closure mechanism 198 may be positioned along or adjacent to the split line between the first shell component 180 and the second shell component 182 to engage each of the shell components and allow actuation for opening and closing of the luggage article 100. The closure mechanism 198 may be a discrete mechanism, such as a latch, or may be a continuous-closure mechanism positioned along at least a part of the length of the split line, such as a zipper.

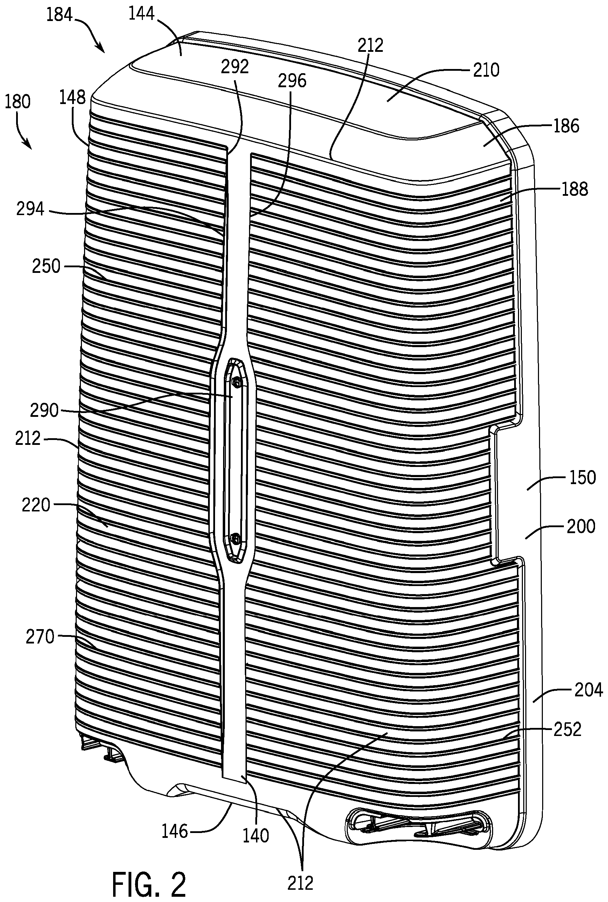

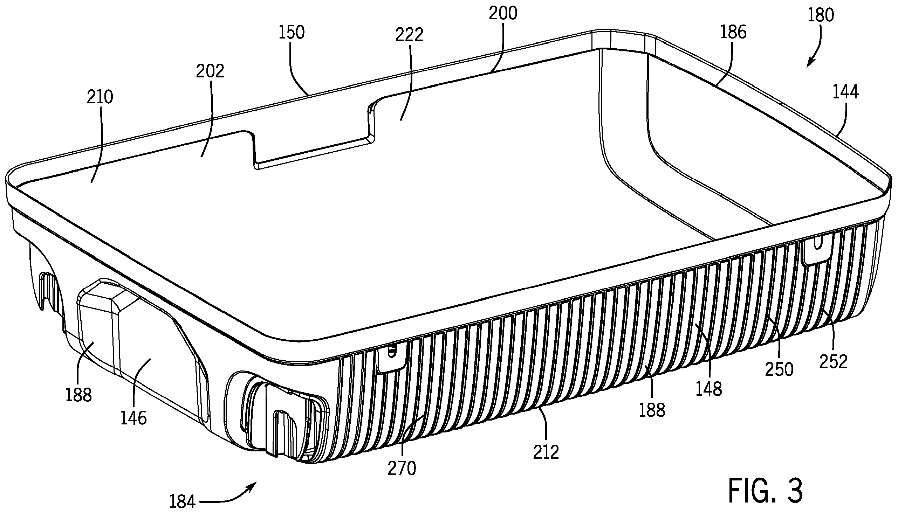

As shown, referring to Fig. 2, the first shell component 180, which may be referred to generally as a luggage shell, may be defined by a major face, such as the front major face 140, and a sidewall 210 extending from a peripheral boundary 212 of the major face 140. In such examples, the sidewall 210 may define at least a portion of at least one of the top face 144, the bottom face 146, the left side face 148, and the right side face 150 of the luggage article 100. For instance, in the illustrated example, the sidewall 210 may define at least a portion of each of the top face 144, the bottom face 146, the left side face 148, and the right side face 150 of the luggage article 100. Other configurations are contemplated, including examples where the sidewall 210 defines (at least in part) a subset of the top face 144, the bottom face 146, the left side face 148, and the right side face 150, such as one, two, or three of the four minor faces. In this manner, the sidewall 210 might not form a portion of each of the four side faces. As shown in Figs. 2 and 3, the first shell component 180 includes opposing exterior and interior surfaces 220, 222. The exterior surface 220 may define an outer or visible portion of the luggage article 100 when the luggage article 100 is closed. The interior surface 222 may at least partially define the interior storage volume of the housing 102. In such examples, the first shell component 180 may include a thickness defined between the exterior surface 220 and the interior surface 222.

As explained more fully below, the major face and sidewall 210 of the first shell component 180 may be formed integrally together as a single structure, such as by a molding operation, including injection molding, press molding, or blow molding, for instance. In some alternative examples, the major face and sidewall 210 of the first shell component 180 may be separate components secured together, such as by adhesive, heat or sonic welding, or the like, which are also considered herein to create an integral single structure.

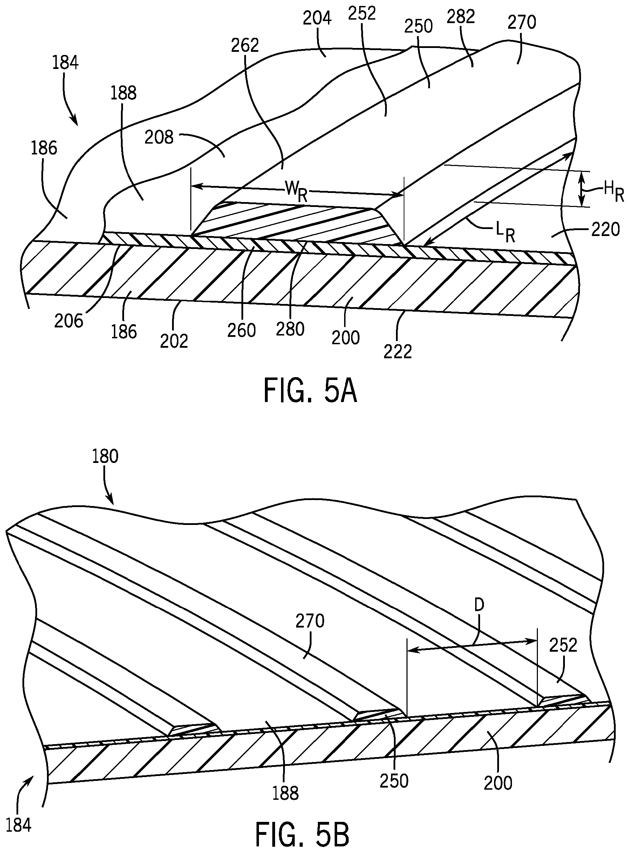

Referring to FIGS. 2-5B, the first shell component 180 is formed, at least in part, by a lamina 184 of a plurality of layers or materials. For instance, the first shell component 180 may be formed by a lamina 184 of at least a shell portion 186 and a carrier film 188, or formed by a lamina 184 of at least the shell portion 186, the carrier film 188, and a material layer 250. As described herein, the shell portion 186 is formed by a substrate layer 200 with inner and outer surfaces 202, 204. In such examples, the substrate layer 200, which may be referred to as a substrate material layer, may include a thickness defined between the inner and outer surfaces 202, 204. Depending on the particular application, as shown in FIG. 5A, the thickness of the substrate layer 200 may be between about 1mm and about 3mm, such as between about 1.4mm and about 2.5mm. The carrier film 188 includes opposing first and second surfaces 206, 208. The first surface 206 is affixed to the outer surface 204 of the substrate layer 200. The second surface 208 is affixed to the material layer 250. In this manner, the carrier film 188 connects the material layer 250 to the substrate layer 200, as explained more fully below.

In some examples, the entirety of the first shell component 180 may be formed by the lamina 184, or only a portion, or portions, of the first shell component 180 may be formed by the lamina 184, as further described below. In other words, the first shell component 180 may have regions where it is formed only by the substrate layer 200 of the shell portion 186, and not formed by the lamina 184 defined by the combination of the substrate layer 200 and carrier film 188 or defined by the combination of the substrate layer 200, carrier film 188, and material layer 250. In such examples, the outer surface of the first shell component 180 may be defined by the substrate layer 200, the carrier film 188, and/or the material layer 250, such as the outer surface defined entirely by the material layer 250, by a combination of the material layer 250 and the carrier film 188, by a combination of the material layer 250 and the substrate layer 200, by a combination of the material layer 250, carrier film 188, and substrate layer 200, or the like. The material layer 250 is shown in one example of a pattern, e.g. spaced ribs 270, that it may form on the first shell component 180, as detailed more fully below.

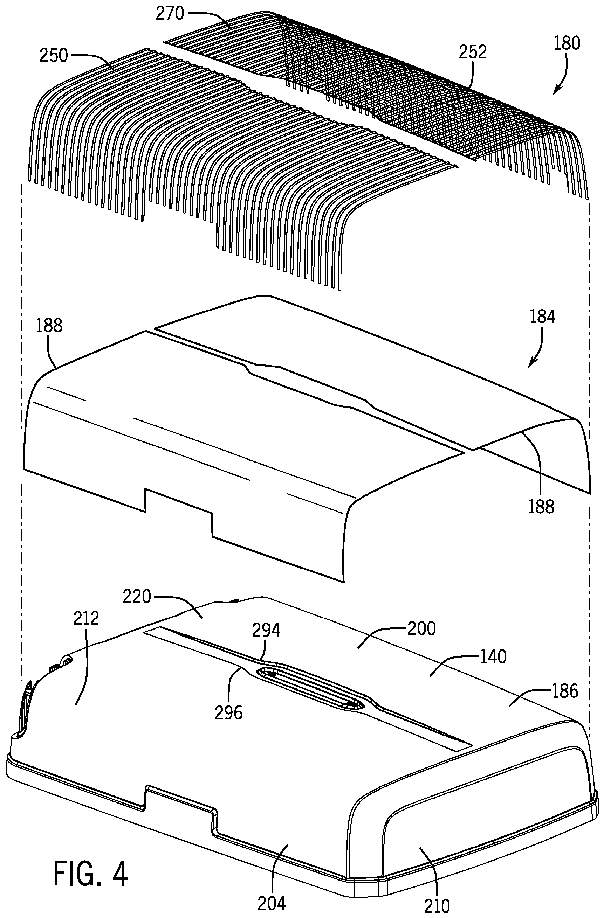

FIG. 4 shows the first shell component 180, with the layers forming the lamina 184 in exploded view, namely the carrier film 188 that is affixed to the substrate layer 200, and the material layer 250 that is affixed to the carrier film 188. FIG. 5A is a partial cross-sectional view of this example of the layers of the lamina 184 forming the first shell component 180. FIG. 5B is another partial cross-sectional view of this example of the layers of the lamina 184 forming the first shell component. In particular, a region of the first shell component 180 defined by the lamina 184 is shown at AA, and a region of the first shell component 180 not defined by the lamina 184 is shown at BB. Also, a detail of the profile of the material layer 250 protruding above (e.g. standing proud from) an outer surface (second surface 208) of the carrier film 188, as well as the outer surface 204 of the substrate layer 200. Though FIGS. 2-5 illustrate the first shell component 180, the second shell component 182 may be configured similarly. Thus, the description directed to the first shell component 180 may apply to the second shell component 182, if included as part of the luggage article 100.

The substrate layer 200 may be formed from a single material or as a lamina or composition of more than one layers of different or similar materials. The substrate layer 200 provides the structural integrity, impact resistance, and crush resistance characteristics of the first shell component 180, and when combined with the second shell component 182, to the luggage article 100. Depending on the particular application, the substrate layer 200 may include a plastic material, such as polypropylene or other material or combinations of materials, and may also be formed by more than one layer of such materials. The substrate layer 200 may have a first material property. The first material property may be any mechanical or structural property of the substrate layer 200. For instance, the substrate layer 200 may include a first abrasion resistance, a first hardness level, a first adhesion property, or the like. In such examples, the first material property may define a first resistance to local penetration, scratching, machining, wear, abrasion, and/or yielding. Depending on the particular application, the first material property of the substrate layer 200 may be different compared to other components of the luggage article 100. For example, the hardness level or abrasion resistance of the substrate layer 200 may be relatively high compared to other components of the luggage article 100. In alternative examples, the hardness level or abrasion resistance of the substrate layer 200 may be relatively low compared to other components of the luggage article 100.

With continued reference to FIGS. 2-5B, the first shell component 180 includes regions having material layer 250 forming at least part of the exterior surface 220, though the material layer 250 may be covered with additional layers or materials in some examples. Accordingly, the material layer 250 may be or form an outer material layer of the first shell component 180, without intent to limit. As described more fully below, the material layer 250 provides abrasion or scratch resistance to the shell portion 186 of the first shell component 180. For instance, the material layer 250 may define a sacrificial layer, abrading surface, or protective offset spacing to limit damage by abrasion, scratching, or the like to the substrate layer 200 of the first shell component 180. For instance, as shown in FIG. 5, the material layer 250 may form at least one feature 252 protruding away from the outer surface 204 of the substrate layer 200. As described herein, the individual feature 252 may include a solid sheet or a pattern of individual features. For instance, a plurality of individual features 252 may form a pattern on the shell portion 186. Though shown as including a plurality of features 252 forming a pattern on the shell portion 186, in some examples, the material layer 250 may form a complete layer on the substrate layer 200.

As shown, the feature 252, or features 252, have a top portion and define a height dimension H_{R}. The feature or features 252 protrude away from, or stand proud from, the outer surface 204 of the substrate layer 200. The feature or features 252 create a cross-sectional profile that impede objects from contacting, and thus possibly damaging, the substrate layer 200. The height H_{R} of the feature or features 252 creates a gap or space between the top of the feature 252 and the field surface of the substrate layer 200 (which may have the carrier film 188 overlying it). The material layer 250 is proud to the exterior surface 220 of the first shell component 180 and spaces the substrate layer 200 away from potential sources of abrasion. In such examples, when the first shell component 180 is positioned against the surface of an object (e.g., the ground, a support floor, a luggage cart, a vertical wall, luggage handling equipment, etc.), the object's surface contacts the material layer 250 first, with the material layer 250 limiting the object's surface from contacting the substrate layer 200. To the extent the object does contact the substrate layer 200, it will likely have less of a damaging effect given the interference of the material layer 250. In such examples, when the first shell component 180 is abraded against the object's surface, the material layer 250 may be damaged, likely leaving the substrate layer 200 of the first shell component 180 substantially untouched and/or protected. Such configurations may be beneficial, such as in examples where damage to the material layer 250 is less noticeable than, or preferred over, damage to the outer surface 204 of the substrate layer 200.

Depending on the particular application, the material layer 250 may be a plastic or a rubber material, among others, and in one example is a thermoset polyurethane material. Though other materials may be used, such as a thermoplastic polyurethane, thermoset polyurethane provides many benefits. For instance, thermoset polyurethane may provide good abrasion resistance as well as adherence properties. In addition, thermoset polyurethane has good flow characteristics for use in mold processes, thereby allowing finer details and a thinner material thickness to be formed compared to other materials, such as thermoplastic polyurethane. In one example, the thermoset polyurethane may be formed from a two-part mixture of polyol and isocyanate, such as in a 76% polyol: 24% isocyanate mixing ratio, though other mix ratios and mixtures are contemplated. The individual parts of the mixture may be combined prior to or during formation of the material layer 250, such as just prior to or during injection of the thermoset polyurethane into a mold. The material layer 250 may be a contrasting or matching color to the substrate layer 200 to provide a desired aesthetic characteristic to the luggage article 100. In some examples, the material layer 250 may be clear, transparent, or translucent. In some examples, the material layer 250 may be opaque.

The material layer 250 may have a second material property. The second material property may be any mechanical or structural property of the material layer 250. For instance, the material layer 250 may define a second abrasion resistance, a second hardness level, a second adhesion property, or the like. In such examples, the second material property may define a second resistance to local penetration, scratching, machining, wear, abrasion, and/or yielding. The second material property of the material layer 250 may be different than the first material property of the substrate layer 200. For instance, the outer material 250 may be harder or softer than the substrate layer 200. In one example, the substrate layer 200 may be about 1.5 to about 3 times harder or softer than the material layer 250. In such examples, the relatively softer material layer 250 may provide enhancements to the luggage article 100 by absorbing impact energy and improving (e.g. increasing) frictional properties of the first shell component 180 through contact of the material layer 250 with an object or surface. In some examples, the material layer 250 features may limit sliding movement of the first shell component 180 against a surface, such as limiting the luggage article 100 from sliding around when positioned on its side. Though described as being softer, in some examples, the material layer 250 may be harder than the substrate layer 200.

The second material property may be selected to provide a desired abrasion resistance performance. For instance, the material layer 250 may resist abrasion better than the substrate layer 200. In particular, the luggage article 100 may be slid or abraded against a surface, in which case the material layer 250 may resist or limit damage to the exterior surface of the luggage article 100 caused by such abrasion compared to the damage that would occur to the substrate layer 200 without the presence of the material layer 250. In some examples, the first and second material properties may prevent or limit bonding of the material layer 250 directly to the substrate layer 200. In such examples, an interface material or structure may be necessary to connect the material layer 250 to the substrate layer 200, as explained in more detail below.

As shown in FIGS. 5A and 5B, the material layer 250 may include a thickness defined between a bottom 260 of the feature affixed to the carrier film 188 and a top region 262 of the feature. In such examples, the bottom 260 of the material layer 250 may engage the second surface 208 of the carrier film 188. In such examples, the top region 262 protrudes away from the outer surface 204 of the substrate layer 200 to create the raised abrading surface noted above.

As explained herein, the material layer 250 may be thin to limit the increase in the weight of the first shell component 180. Depending on the particular application, the thickness of the material layer 250 may be between about 0.5mm and about 0.75mm, such as about 0.65mm. Depending on the particular application, the material layer 250 may protrude away from second surface 208 of the carrier film 188 by a dimension equal to, or substantially equal to, the thickness of the material layer 250 itself. As shown in FIGS. 5A and 5B, the material layer 250 may protrude away from the outer surface 204 of the substrate layer 200 by a dimension equal to, or substantially equal to, the thickness of the material layer 250 plus the thickness of the carrier film 188. The height of the material layer 250 may vary depending on a desired relief from the second surface 208 of the carrier film 188. In such examples, the thickness of the shell portion 186 may be greater than the thickness of the material layer 250. For instance, the thickness of the substrate layer 200 may be between about 2 and 4 times the thickness of the material layer 250. For example, the ratio between the thickness of the substrate layer 200 to the thickness of the material layer 250 may be between about 2.00:1 to 4:00 to 1, or about 2.15:1, about 2.31:1, about 2.46:1, about 3.08:1, about 3.54:1, or about 3.85:1.

As noted above, the material layer 250 is included as part of the structure of the lamina 184, and the lamina 184 may be formed at user-desired locations on the first shell component 180. So, the material layer 250 may be positioned at one or more locations on the first shell component 180. Because the material layer 250 is affixed to the carrier film 188, and the carrier film 188 may be applied to the substrate layer 200 in user-selected regions in the molding process described herein (thus forming the lamina regions 184), the material layer 250 may be applied to selected locations on the exterior of the first shell component 180.

Referring to FIG. 2, for example, the lamina 184 is formed along a majority of the height and width of the major face 140 of the first shell component 180, and is also formed along the longitudinal minor side faces 144, 146, 148, 150 (only one shown in Fig. 2). The material layer 250, then, is located in substantially the same locations on the first shell component 180. In the example shown, the material layer 250 may extend along at least a portion of the height H and width W of the major face 140 of the first shell component 180. Additionally of separately, the material layer 250 may extend along at least one of the minor faces of the first shell component 180. For instance, the material layer 250 may extend along at least a portion of the sidewall 210 of the first shell component 180. In particular, the material layer 250 may extend along at least a portion of each of the left and right side faces 148, 150 of the first shell component 180. In such examples, the material layer 250 may continuously wrap around the first edge region 160 between the major face and left side face 148 of the first shell component 180. Similarly, the material layer 250 may continuously wrap around the second edge region 162 between the major face and right side face 150 of the first shell component 180. Additionally or separately, the material layer 250 may be located in discrete locations on the first shell component 180, such as at the corners, or elsewhere.

The material layer 250 may be formed in a pattern of features or may be formed as a solid sheet to provide a desired abrasion resistance to the first shell component 180, as well as to provide a desired aesthetic characteristic of the case. For example, the material layer 250 may be formed over the entire exterior surface 220 of the substrate layer 200. In other examples, and as shown in FIGS. 2, 5A, and 5B, the material layer 250 may be formed in a pattern such that the material layer 250 does not cover the entire exterior surface 220 of the first shell component 180. For example, the pattern (or solid sheet) of the material layer 250 may be formed on between about 25% and about 75% of the exterior surface 220 of the first shell component 180. In such examples, the material layer 250 may cover a significant surface area of the first shell component 180 without adding significant weight to the shell. For instance, the material layer 250 may add between about 100g and about 150g, preferably between about 120g and about 130g, to the first shell component 180. In such examples, the material layer 250 may account for between about 5% and about 15% of the weight of the first shell component 180. This is in contrast with some conventional designs wherein a secondary material accounts for a significant portion of the shell's weight, such as over 500g, representing an increase of over 30% of the weight of a base shell.

The pattern of features formed by the material layer 250 may vary based on the intended area for abrasion protection and appearance factors. In one example, the material layer 250 may be formed in a pattern of a plurality of similar or dissimilar features 252. The features 252 may abut a field surface defined by the carrier film 188 such that the carrier film 188 does not extend upwardly between the features 252. As one example, the pattern may include a series of elongated ribs 270. The ribs 270 may be spaced apart along the first shell component 180, such as along the height of the first shell component 180 between the top 144 and bottom 146 side faces. In one example, at least portions of the ribs 270 may extend parallel to one another. At least portions of the ribs 270 may extend parallel to one of the side faces of the first shell component 180. For instance, the ribs 270 may extend parallel to at least one of the top and bottom faces 144, 146. In some examples, at least portions of the ribs 270 may extend parallel to a portion of the peripheral boundary 212 of the major face. In one example, the ribs 270 may extend perpendicular to a portion of the split line extending along the left and right side faces 148, 150 of the first shell component 180. Depending on the particular application, the ribs 270 may be spaced equidistantly or non-equidistantly apart, such as in a random pattern. Though shown as including a series of ribs 270, the material layer 250 may be patterned in other manners, such as forming images, shapes, or other designs.

As shown in FIG. 5A and 5B, the ribs 270 may include a width W_{R} and a length L_{R}. The width W_{R} and length L_{R} of the ribs 270 may be dependent upon the size of the first shell component 180. For instance, the ribs 270 may be wider and longer on shell components of greater size. Similarly, the ribs 270 may be narrower and shorter on shell components of smaller size. As one example, the width W_{R} of each rib may be between about 1mm and about 10mm, such as between about 3mm and about 4.5mm, depending on the size of the first shell component 180. In like manner, the length L_{R} of each rib may be between about 250mm and about 1,000mm, such as between about 482mm and about 804mm, depending on the size of the first shell component 180. In such examples, the height or thickness H_{R} of the ribs 270 may remain relatively constant between case sizes. For instance, the thickness H_{R} of the ribs 270 may not change based on the size of the first shell component 180. As shown in FIG. 5A, each rib 270 may include a trapezoidal prism shape in section, with each rib having a base 280 greater in width than a top 282.

The features 252, such as the ribs 270 provided by example, may define different cross sectional configurations, including rectangular, rounded or curved ribs, or the like. The extension of the features 252 may be continuous or discontinuous, for instance a feature 252 having an elongated rib shape may be continuous in length, or may have gaps or spaces along its length. The width, height, sectional shape, and/or pattern configuration of a feature 252 or many features 252 may vary on the first shell component 180. For example, as shown in FIGS. 2, 5A, and 5B, the features 252 may be spaced apart by a distance D, such as along the height of the first shell component 180. The spacing of the features 252 may expose the substrate layer 200 (which may have the carrier film 188 overlying it) between the features 252. The distance D may be less than the width W_{R} of the features 252, greater than the width W_{R} of the features 252, or equal to the width W_{R} of the features 252. For example, the distance D may be between about 5mm and about 15mm.

Referring to FIG. 2, the first shell component 180 may be defined to create regions without the material layer 250 formed thereon. The material layer 250 may not be formed on regions of the shell portion 186 because either i) no pattern is desired, or ii) the lamina 184 is not formed along regions of the first shell component 180. For example, a region free of the material layer 250 may be formed on the major face of the first shell component 180, and defines an elongated center portion 290 extending between the top and bottom faces 144, 146. In such examples, the center portion 290 may include an outer boundary 292 defined at least in part by first and second boundary lines 294, 296. In such examples, the material layer 250 may extend from the outer boundary 292 of the center portion 290 to the peripheral boundary 212 of the major face. As shown, a first centerline CL may be defined along the major face of the first shell component 180 between the top and bottom faces 144, 146. In such examples, the first boundary line 294 may extend along a position between the first centerline CL and the left side face 148. The second boundary line 296 may extend along a position between the first centerline CL and the right side face 150. In one example, at least portions of the first and second boundary lines 294, 296 may extend parallel to the first centerline CL of the first shell component 180.

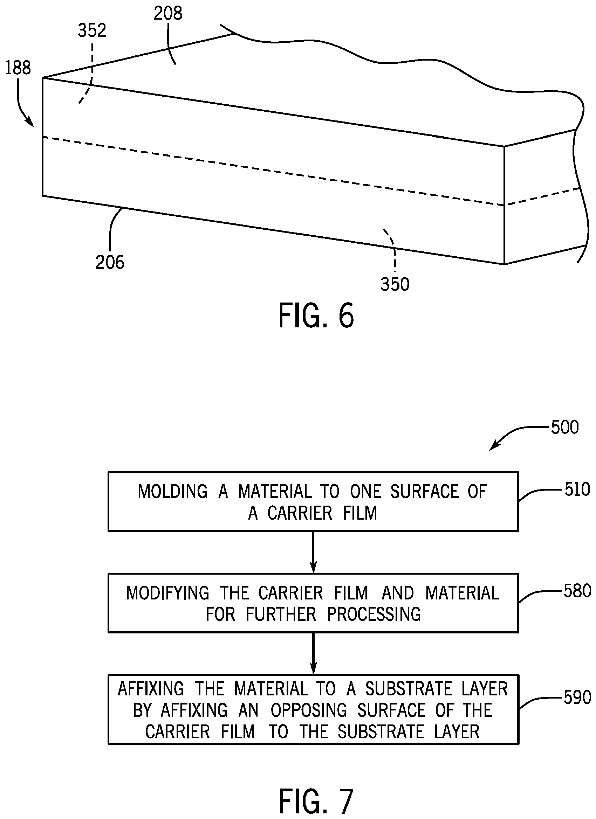

FIG. 6 is a cross-sectional view of a sheet of carrier film 188. Referring to FIGS. 4 and 6, and as referenced above, the carrier film 188 is part of the lamina 184 defining the first shell component 180. As explained herein, the carrier film 188 provides an interface between the substrate layer 200 and the material layer 250. More particularly, the carrier film 188 is configured to bond, affix, or otherwise attach the material layer 250 to the substrate layer 200. In effect, the carrier film 188 acts as a glue or application interface between the substrate layer 200 and the material layer 250 to fixedly attach the material layer 250 to the exterior surface 220 of the first shell component 180 in a manner that facilitates ease of manufacture of the luggage case and avoids peeling or delaminating with use. Without the use of the carrier film 188, the material layer 250 may not adequately bond to the exterior surface 220 of the first shell component 180. More particularly, the substrate layer 200 and the material layer 250 may be different materials with different properties and incompatible bonding characteristics. In such examples, the carrier film 188 may act as an interface or bridge to cause the two materials to bond together. For example, the carrier film 188 may allow a thermoset polyurethane material to bond to a polypropylene material, a rubber material to bond to a plastic material, or the like.

Depending on the particular application, the carrier film 188 may be a thin sheet of material, and may include one or more layers. For instance, the carrier film 188 may include first and second layers 350, 352 bonded together. In such examples, the first and second layers 350, 352 may adhere to the substrate layer 200 and the material layer 250, respectively. In one example, the first layer 350 may include polypropylene, such as being formed from a polypropylene foil. The second layer 352 may be formed from a polyurethane material, such as a polyurethane foil. The first and second layers 350, 352 may be bonded together (such as by a bonding agent), or may be coextruded to be affixed together. In some examples, at least one of the exterior surfaces of the carrier film 188 may be specially treated or coated to improve adhesion of the carrier film 188 to at least one of the substrate layer 200 and the material layer 250. In one example, a polyurethane lacquer is thinly spread on an exterior surface of a polypropylene foil. In another example, one side of a polypropylene foil receives a corona treatment to aid adhesion with the material layer 250. In such examples, the coating or treatment may be applied on the side of the carrier film 188 that needs adhesion with the material layer 250.

The carrier film 188, whether multi-layered or single-layer, may include a thickness between about 100µm and about 250µm, though other thicknesses are contemplated. The carrier film 188, or portions of the carrier film 188, may be flexible or stiff. The carrier film 188 may be cut to take different shapes to allow the carrier film 188 to be positioned as desired on the shell portion 186 to provide an anchor to which the material layer 250 is bonded. The carrier film 188 may be transparent or translucent. In some examples, the carrier film 188 may be opaque to provide a desired aesthetic characteristic. In some examples, the carrier film 188 may be printed with a design, whether before or after the material layer 250 is molded thereto. In such examples, the material layer 250 may be interrelated with the printed design of the carrier film 188 to provide an additional effect or pattern. In examples where the material layer 250 is clear or transparent, the material layer 250 may magnify the printed design of the carrier film 188 to provide a different effect, such as enhancing the printed design.

The shell portion 186 of the first shell component 180 may include surface features 252 of the material layer 250 that have a lower hardness than the underlying substrate layer 200 in order to improve the abrasion resistance in the lamina regions 184. The lamina regions 184 may be located on the first shell component 180 at selected positions to create the expected level of abrasion resistance and desired aesthetic appearance. The lamina 184 includes the substrate layer 200 and the carrier film 188, and the material layer 250 (at least where it forms part of a pattern). More particularly, because the material layer 250 may be formed in a pattern, there may be places where the lamina 184 is only two layers (substrate layer 200 and carrier film 188) because the material layer 250 as absent as part of the pattern.

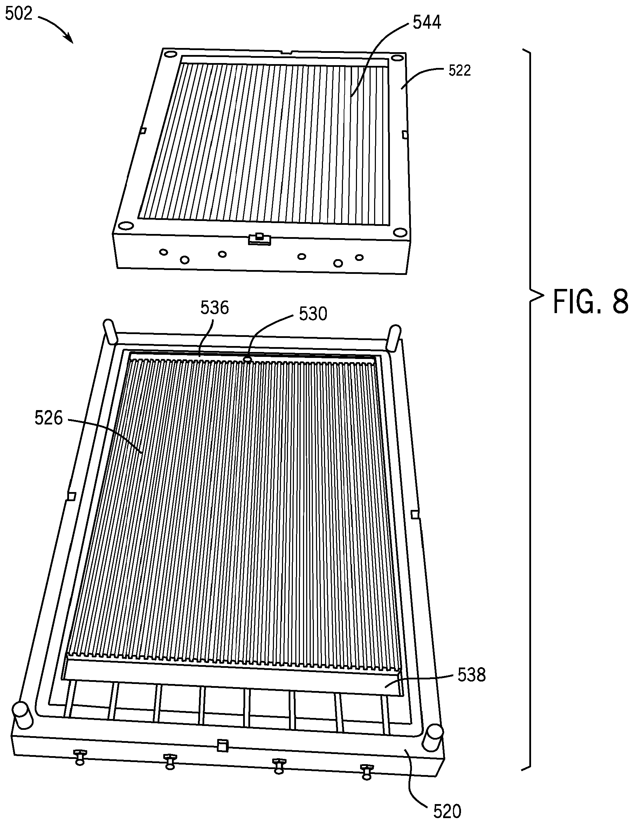

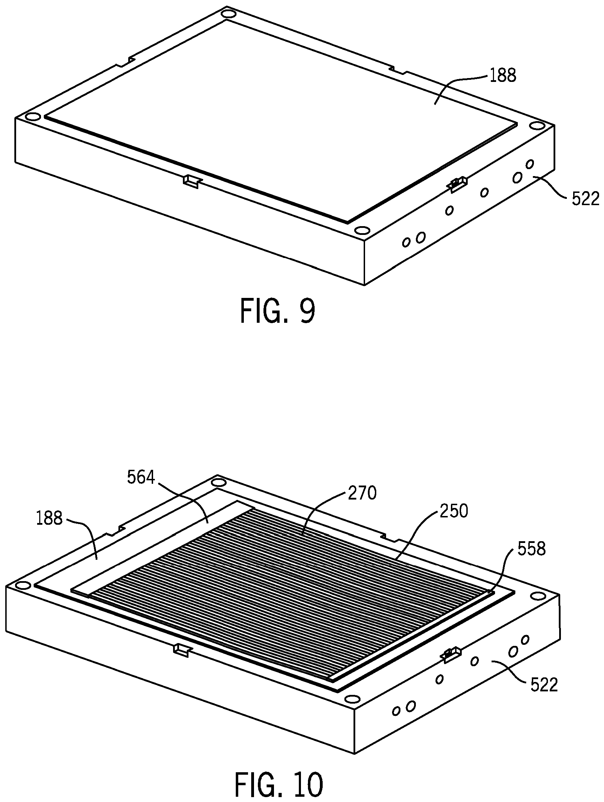

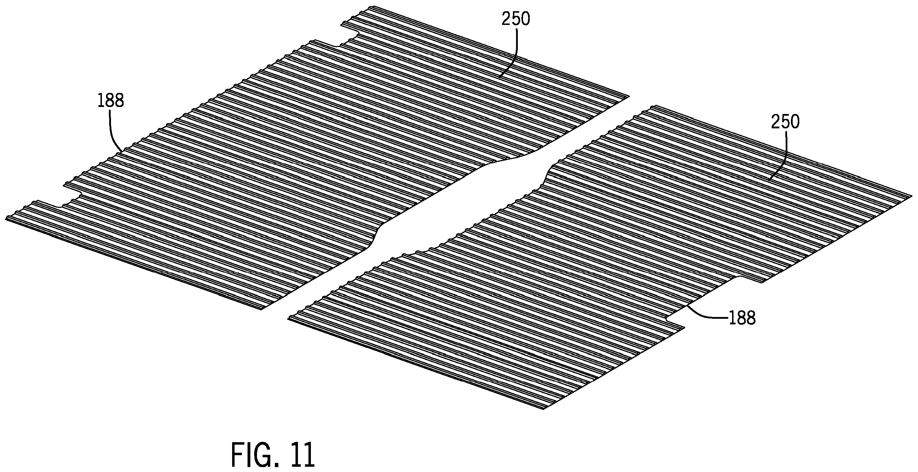

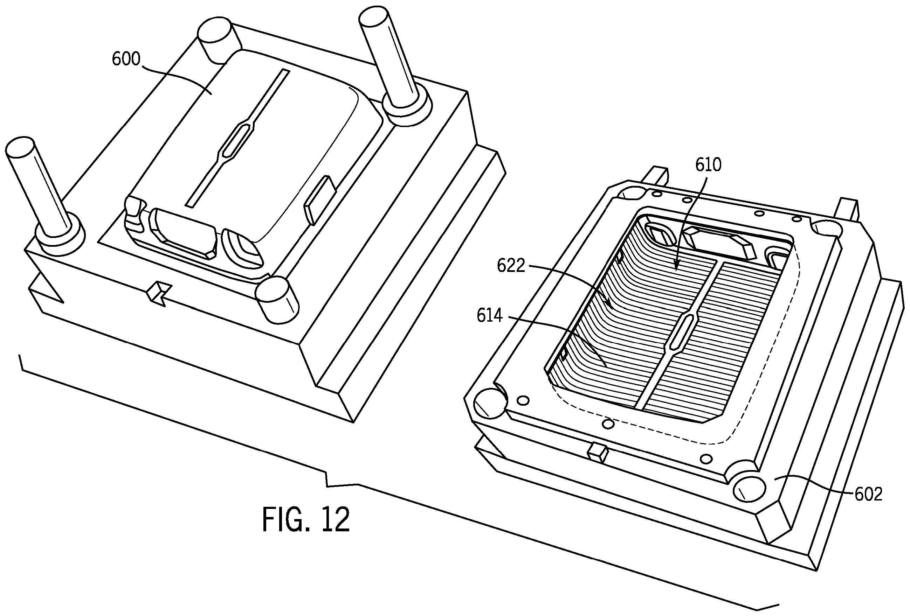

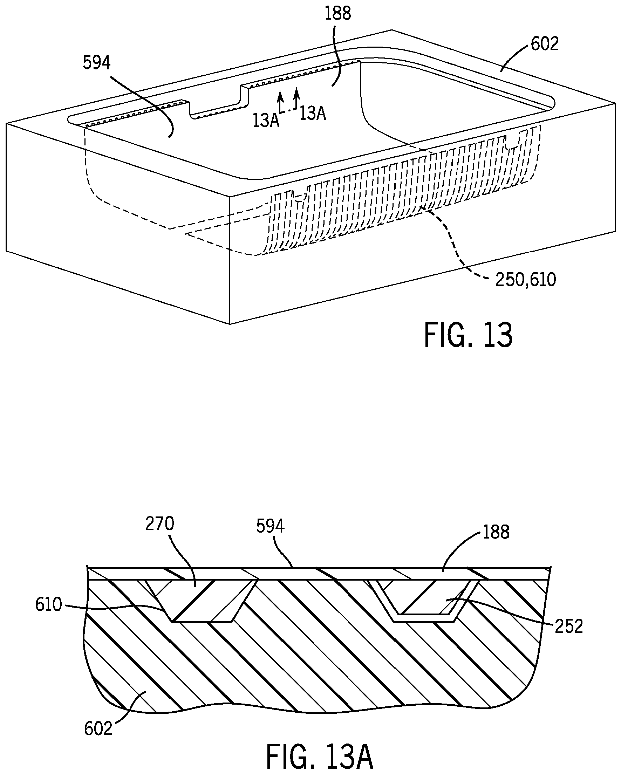

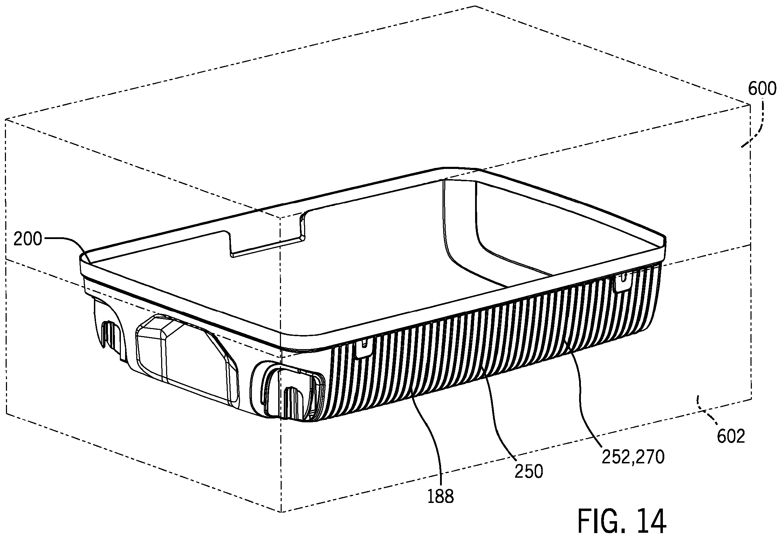

Manufacturing the first shell component 180 to form the lamina 184 includes a molding process described below and with respect to Figs. 7 through 14. FIG. 7 is a flowchart of a method 500 of producing a luggage shell for a luggage article, such as the first shell component 180 of luggage article 100. FIG. 8 is an exploded view of a first mold arrangement. FIG. 9 is an isometric view of the carrier film 188 positioned within the first mold arrangement. FIG. 10 is an isometric view of the material layer 250 formed on the first surface 206 of the carrier film 188 in the first mold arrangement. FIG. 11 is an isometric view of the carrier film 188 and material layer 250 removed from the first mold arrangement and modified for future processing. FIG. 12 is an exploded view of a second mold arrangement. FIG. 13 is an isometric view of the carrier film 188 and material layer 250 positioned within the second mold arrangement. FIG. 14 is an isometric view of the first shell component 180 formed within the second mold arrangement and affixed to the carrier film 188 and material layer 250. Referring to FIGS. 7-14, the first shell component 180 may be formed by a two-part molding process or method. In particular, the material layer 250 may be molded to the carrier film 188 in a first molding process, and the carrier film 188 (and material layer 250) may be molded to the substrate layer 200 in a second molding process, as explained below, to form the first shell component 180. Depending on the particular application, the two-part molding process may occur within the same mold, either concurrently or sequentially, or may occur in separate molds. For instance, as explained below, the first molding process may occur in a first mold 502, with the second molding process occurring subsequently in a separate, second mold 504. Portions of the molding process are mentioned above for clarity in description, but are not intended to limit the general nature of the description of the process.

Referring to FIG. 7, the method 500 may include molding the material layer 250 to one surface of the carrier film 188 (Block 510). In one example, the material layer 250 may be molded to the second surface 208 of the carrier film 188. The material layer 250 may be molded to the second surface 208 of the carrier film 188 in a pattern of features 252, or alternatively in a solid sheet. For instance, the material layer 250 may be molded to the second surface 208 of the carrierfilm 188 in a plurality of individual features 252. Though a plurality of ribs 270 are shown, other features are contemplated, as described above.

Referring to FIGS. 8-10, depending on the particular application, the material layer 250 may be molded to the carrier film 188 by injection molding within a first mold 502. For instance, as noted above, a polyurethane material (e.g., thermoset polyurethane) may be molded to the side of the carrier film 188 that will be facing away from the substrate layer 200. In one example, the first mold 502 includes first and second mold sections 520, 522. The first mold section 520, which may be referred to as a lower mold or lower mold section, includes one or more pattern recesses or cavities 526 defined in its mold surface. The pattern recesses 526 may correspond, either generally or exactly, to the pattern of the features 252 to be formed by the material layer 250. For instance, the pattern recesses 526 may create the desired shape and layout of the pattern of features 252 of the material layer 250, such as the ribs 270. The pattern recesses 526 may create ribs 270 having different cross-sectional shapes, lengths, and locations on the carrier film 188. In addition, the first mold section 520 may include an injection port 530 through which the material layer 250 is injected to form the pattern of features 252 and affix the material layer 250 securely to the carrier film 188. In one example, the first mold section 520 may include first and second runner cavities 536, 538 defined in its mold surface. In such examples, the pattern recesses 526 may be defined between and connected to the first and second runner cavities 536, 538. As shown, the injection port 530 may be defined within the first runner cavity 536.

The second mold section 522, which may be referred to as an upper mold or upper mold section, may include a plurality of openings 544 defined in its mold surface. The openings 544 may be connected to a vacuum source to hold the carrier film 188 against the mold surface of the second mold section 522 and within the first mold 502 by a vacuum force. In one example, the openings 544 may be defined as small holes or slit openings in the mold surface.

As shown, the first mold 502 is a flat mold, with the mold surfaces of the first and second mold sections 520, 522 being generally flat or planar. In this manner, the material layer 250 may be molded to the carrier film 188 in a flat or planer configuration. It is noted, however, that other mold configurations are contemplated. For instance, the mold surfaces of the first and second mold sections 520, 522 may be curved to match, mimic, or correspond to the shape (curvature) of the first shell component 180. A flat mold, however, may facilitate control over the final molded product. For example, a flat mold may allow the creation of pattern features having finer detail and a thinner dimensions than may be the case if molding onto a curved surface. A flat mold may also permit greater pressures and control over the molded pattern compared to molding on a curved surface, thereby minimizing leakage of the material layer 250 during molding and allowing thinner and finer molded patterns. In particular, if the material layer 250 was molded on a curved surface, there is a risk that the material layer 250 may leak thereby requiring lower molding pressures, resulting in the molded patterns be larger to allow the material to fully flow through the pattern. By molding the material layer 250 to the carrier film 188, the flat-molded material layer 250 may be attached to a curved 3D shell or object using the carrier film 188.

To mold the material layer 250 to the carrier film 188, the carrier film 188 may be placed or positioned in the first mold 502 between the first and second mold sections 520, 522. For instance, the carrier film 188 may be placed against the second mold section 522, with the second surface 208 of the carrier film 188 positioned against the mold surface of the second mold section 522. As noted above, the carrier film 188 may be held against the mold surface of the second mold section 522 by a vacuum force created by a vacuum source connected to the openings 544 defined in the mold surface of the second mold section 522. The vacuum force may be about 20 mbar. Once the carrier film 188 is positioned, the first and second mold sections 520, 522 may be pressed and sealed together in preparation for injection molding of the material layer 250. In one example, the first and second mold sections 520, 522 may be clamped together under a clamping pressure between about 80 bar and about 150 bar, such as about 120 bar. In some examples, the first and second mold sections 520, 522 may be clamped together under a clamping force between about 10,000kN and about 12,000kN, such as about 11,000kN.

Once the first and second mold sections 520, 522 are sealed together, the material layer 250 may be injected into the first mold 502. In such examples, the material layer 250 may be injected through the injection port 530. In accordance with the description above, thermoset polyurethane may be injected through the injection port 530 to form the material layer 250, though other materials may be utilized. In particular, polyol may be injected into the first mold 502 under a first pressure, with isocyanate injected into the first mold 502 under a second pressure. The first and second pressures may be similar or different. For example, isocyanate may be injected into the first mold 502 at a higher pressure than polyol, or vice versa. Depending on the particular application, isocyanate may be injected at a pressure between about 180 bar and about 220 bar, such as about 197 bar. Polyol may be injected at a pressure between about 120 bar and about 170 bar, such as about 145 bar. In some examples, the thermoset polyurethane may be injected at a temperature between about 190°C and about 250°C, though other temperatures are contemplated.

Once injected through the injection port 530, the material layer 250 may flow along the first runner cavity 536 to create a first material runner 558, across the pattern recesses 526 to create the features 252 of the material layer 250 (e.g., ribs 270) in a molded pattern, and along the second runner cavity 538 to create a second material runner 564. For instance, the material layer 250 may flow from the injection port 530 and first runner cavity 536 and across the pattern recesses 526 to the second runner cavity 538. Injection of the thermoset polyurethane into the first mold 502 may last between about 3 seconds and about 9 seconds, such as between about 4.1 seconds and about 5.7 seconds. As noted above, the pattern recesses 526 may form a pattern of small ribs or other feature shapes to reduce weight. Alternatively, the material layer 250 may be formed as a complete thin layer or in different patterns. Once fully injected into the first mold 502, the material layer 250 may be cured between about 5 seconds and about 30 seconds, such as between about 8 seconds and about 10 seconds, about 20 seconds, or the like. Depending on the particular application, curing of the material layer 250 (e.g., thermoset polyurethane) may be delayed until the material layer 250 is completely formed. Once the material layer 250 is molded to the carrier film 188 and cured, the carrier film 188 and material layer 250 may be removed from the first mold 502 for further processing and finishing, as described below.

Referring to FIG. 11, the method 500 may include modifying the carrier film 188 and material layer 250 for further processing (Block 580). For instance, the carrier film 188 and molded material layer 250 may be cut to locate the pattern of features 252 on the first shell component 180. For instance, the carrier film 188 and material layer 250 may be cut such that the cut shape corresponds (either generally or exactly) to where a designer wants the features 252 to be placed on the shell portion 186 to achieve a desired end product. In one example, the first and second material runners 558, 564 may be removed from the molded pattern, as well as any other excess material or injection point marks, if any. Additionally or alternatively, excess carrier film 188 may be removed by cutting the carrier film 188 around the molded pattern. In some examples, a portion of the molded pattern may be trimmed to account for features of the first shell component 180. For instance, the molded pattern may be trimmed to account for a carry handle, a hinge structure, or indicia, among others, on the first shell component 180.

In some examples, the carrier film 188 and molded material layer 250 may be formed into a 3D shape before being affixed to the substrate layer 200. For instance, the carrier film 188 and molded material layer 250 may be molded into a 3D shape in a separate mold or process, the 3D shape corresponding to, either generally or exactly, to the desired shape of the first shell component 180. In such examples, the 3D formed carrier film 188 and molded outer material 250 may be attached to or inset molded to the substrate layer 200.

Referring to FIG. 7, the method 500 may include affixing the material layer 250 to the substrate layer 200 by using the carrier film 188 as one of the mold surfaces when forming the first shell component 180 in a molding process (Block 590). The first surface 206 of the carrier film 188 opposite to the second surface 208 to which the material layer 250 is formed is used as a mold surface 594 to form the substrate layer 200. As noted above, the first surface 206 of the carrier film 188 is affixed to the substrate layer 200 of the first shell component 180. Depending on the particular application, and as shown in FIGS. 12-14, the carrier film 188 may be affixed to the substrate layer 200 by injection of the material used for the substrate layer 200 into a second mold 504. In such examples, the second mold 504 includes male and female mold housings 600, 602, the male mold housing 600 arranged to fit at least partially within the female mold housing 602 to define a shape of the first shell component 180. In such examples, the respective mold surfaces of the male and female mold housings 600, 602 may generally define the interior and exterior surfaces 222, 220 of the first shell component 180 through the molding process.

Referring to FIG. 12, the female mold housing 602 may include one or more grooves 610 defined in its mold surface, the grooves 610 corresponding, either generally or exactly, to at least a portion of the molded features 252 (see Fig. 5A & B) formed by the material layer 250 on the carrier film 188. In this manner, the grooves 610 may provide an alignment feature to align the features 252 and carrier film 188 within the second mold 504 before injection of the substrate layer 200. Additionally or alternatively, the grooves 610 may provide relief for the features 252 such that the first surface 206 of the carrier film 188 provides a smooth and/or flat molding surface. Like the second mold section 522 of the first mold 502, the female mold housing 602 may include one or more slits 614 defined in its mold surface, the slits 614 connected to a vacuum source to hold the carrier film 188 and/or material layer 250 against the mold surface of the female mold housing 602 by a vacuum force. As shown, the female mold housing 602 includes a cavity 622 in which the male mold housing 600 is at least partially received to form the first shell component 180.

To affix the material layer 250 to the substrate layer 200, the carrier film 188 and material layer 250 may be placed within the cavity 622 of the female mold housing 602. As shown in FIG. 13A and B, the material layer 250 may be placed within the grooves 610 and against the mold surface of the female mold housing 602. In such examples, the carrier film 188 (e.g., the first surface 206 of the carrier film 188) may face inwardly into the mold space. As noted above, the carrier film 188 and/or material layer 250 may be held against the mold surface of the female mold housing 602 by a vacuum force. Once positioned, the male mold housing 600 may be positioned at least partially within the cavity 622 of the female mold housing 602 to define a space between the male and female mold housings 600, 602, the space corresponding to a thickness of the first shell component 180. Once the male mold housing 600 is positioned at least partially within the female mold housing 602, a material may be injected into the space between the male and female mold housings 600, 602 to form at least a portion of the substrate layer 200 and bond the substrate layer 200 to the carrier film 188 (see FIG. 14). In this manner, the lamina 184 is formed with a plurality of layers, with at least portions of the carrier film 188 positioned between the substrate layer 200 and the material layer 250. In accordance with the description above, polypropylene may be injected within the space between the male and female mold housings 600, 602 to form the first shell component 180, though other plastic materials may be utilized.

Though shown as molded together in a 3D mold, in some examples, the carrier film 188 may be laminated or inset molded onto a flat substrate, such as a flat substrate layer 200. In such examples, the resulting laminate may then be formed into the 3D shell shape, such as by vacuum or plug molding. In such examples, the material layer 250 may be molded onto the carrier film 188 before, during, or after laminating the carrier film 188 onto the substrate layer 200. In one example, the material layer 250 may be molded onto the carrier film 188 before the laminate of carrier film 188 and flat substrate layer 200 is 3D formed.

Though the first shell component 180 is described above as being formed by injection molding, the first shell component 180 may be formed, and affixed to the carrier film 188, in many ways. For example, the first shell component 180 may be formed by plug molding or vacuum forming. In such examples, the substrate layer 200 may be initially formed as a flat sheet. The flat sheet may be positioned over the cavity 622 of the female mold housing 602. In plug molding, the male mold housing 600 may then be pressed against the sheet to press the sheet against the female mold housing 602 to form the first shell component 180.

The luggage article 100 may be formed from a variety of materials and means. The luggage article 100 is illustrated as a hard side luggage case, but may be formed from many combinations of hard side and soft side material. For example, the housing 102 (e.g., the first shell component 180) may be molded from hard side material, or formed from a combination of hard side material and a soft side material (known as a "hybrid" construction) suitably configured to allow for the shell construction as described herein. The hard side material may be a thermoplastic material (self-reinforced or fiber reinforced), ABS, polycarbonate, polypropylene, polystyrene, PVC, polyamide, biaxially oriented polypropylene, and/or PTFE, among others. The luggage article 100 may be formed or molded at least in part in any suitable manner, such as by plug molding, blow molding, injection molding, extrusion, casting, or the like.

All relative and directional references (including: upper, lower, upward, downward, left, right, leftward, rightward, top, bottom, side, above, below, front, middle, back, vertical, horizontal, and so forth) are given by way of example to aid the reader's understanding of the particular examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

Those skilled in the art will appreciate that the presently disclosed examples teach by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall there between.

## Claims

1. A hardside luggage article (100) comprising:
a first shell component (180) formed at least in part by a lamina (184), the lamina including:
a substrate layer (200) defining a surface (204) and a first material property;
a carrier film (188) having opposing first and second surfaces (206, 208), the first surface of the carrier film affixed to the surface of the substrate layer; and
a material layer (250) affixed to the second surface of the carrier film and defining a second material property, wherein the second material property is different than the first material property, and wherein the material layer forms at least one feature (252) protruding away from the surface of the substrate layer; and
wherein the carrier film includes a coating or treatment improving adhesion of the carrier film to at least one of the substrate layer and the material layer.

2. The luggage article of claim 1, wherein the first and second material properties are abrasion resistances or hardness levels of the respective layers.

3. The luggage article of claim 2, wherein the material layer has an abrasion resistance greater than the abrasion resistance of the substrate layer.

4. The luggage article of any preceding claim, wherein the material layer is formed as a solid sheet or at least one individual feature.

5. The luggage article of claim 4, wherein a plurality of individual features (252) form a pattern.

6. The luggage article of claim 5, wherein each individual feature is a rib (270).

7. The luggage article of any preceding claim, wherein:
the substrate layer includes polypropylene; and
the outer material layer includes a thermoset polyurethane.

8. The luggage article of any preceding claim, wherein each of the substrate layer and the material layer defines at least one thickness dimension, and wherein the at least one thickness dimension of the substrate layer is greater than the at least one thickness dimension of the material layer.

9. The luggage article of claim 8, wherein the thickness dimension of the substrate layer is between 2 and 4 times the thickness dimension of the material layer.

10. The luggage article of any preceding claim, wherein the carrier film comprises first and second layers (350, 352) bonded together to affix to the substrate layer and the material layer, respectively.

11. The luggage article of claim 10, wherein the first layer is formed from a polypropylene material, and wherein the second layer is formed from a polyurethane material.

12. The luggage article of any preceding claim, wherein the outer material layer accounts for between 5% and 15% of the total weight of the first shell component.

13. The luggage article of any preceding claim, wherein the first shell component defines a height dimension of between 55cm and 81cm.

14. The luggage article of any preceding claim, further comprising a second shell component (182) pivotably connected to the first shell component at a split line.

## Patentansprüche

1. Hartschalen-Gepäcksgegenstand (100), umfassend:
eine erste Schalenkomponente (180), die wenigstens zum Teil von einem Laminat (184) gebildet ist, wobei das Laminat enthält:
eine Substratschicht (200), die eine Oberfläche (204) und eine erste Materialeigenschaft definiert;
einen Trägerfilm (188) mit gegenüberliegenden ersten und zweiten Oberflächen (206, 208), wobei die erste Oberfläche des Trägerfilms an der Oberfläche der Substratschicht befestigt ist; und
eine Materialschicht (250), die an der zweiten Oberfläche des Trägerfilms befestigt ist und eine zweite Materialeigenschaft definiert, wobei die zweite Materialeigenschaft von der ersten Materialeigenschaft verschieden ist und wobei die Materialschicht wenigstens ein Element (252) bildet, das von der Oberfläche der Substratschicht weg gerichtet vorragt; und
wobei der Trägerfilm eine Beschichtung oder Behandlung aufweist, die die Haftung des Trägerfilms an wenigstens eine von der Substratschicht und der Materialschicht verbessert.

2. Gepäckgegenstand gemäß Anspruch 1, wobei die erste und die zweite Materialeigenschaft Abriebfestigkeit oder Härtegrade der entsprechenden Schichten sind.

3. Gepäcksgegenstand gemäß Anspruch 2, wobei die Materialschicht eine Abriebfestigkeit aufweist, die größer als die Abriebfestigkeit der Substratschicht ist.

4. Gepäcksgegenstand gemäß einem der vorstehenden Ansprüche, wobei die Materialschicht als feste Bahn oder wenigstens ein einzelnes Element gebildet ist.

5. Gepäcksgegenstand gemäß Anspruch 4, wobei eine Vielzahl von einzelnen Elementen (252) eine Struktur bilden.

6. Gepäcksgegenstand gemäß Anspruch 5, wobei jedes einzelne Element eine Rippe (270) ist.

7. Gepäcksgegenstand gemäß einem der vorstehenden Ansprüche, wobei:
die Substratschicht Polypropylen enthält; und
die äußere Materialschicht ein wärmehärtendes Polyurethan enthält.

8. Gepäcksgegenstand gemäß einem der vorstehenden Ansprüche, wobei jede von der Substratschicht und der Materialschicht wenigstens eine Dickenabmessung definiert und wobei die wenigstens eine Dickenabmessung der Substratschicht größer als die wenigstens eine Dickenabmessung der Materialschicht ist.

9. Gepäcksgegenstand gemäß Anspruch 8, wobei die Dickenabmessung der Substratschicht zwischen 2- und 4-mal der Dickenabmessung der Materialschicht beträgt.

10. Gepäcksgegenstand gemäß einem der vorstehenden Ansprüche, wobei der Trägerfilm erste und zweite Schichten (350, 352), die zusammengebunden sind, zur Befestigung an die Substratschicht bzw. die Materialschicht umfasst.

11. Gepäcksgegenstand gemäß Anspruch 10, wobei die erste Schicht aus einem Polypropylenmaterial gebildet ist und wobei die zweite Schicht aus einem Polyurethanmaterial gebildet ist.

12. Gepäcksgegenstand gemäß einem der vorstehenden Ansprüche, wobei die äußere Materialschicht zwischen 5 % und 15 % des Gesamtgewichts der ersten Schalenkomponente bildet.

13. Gepäcksgegenstand gemäß einem der vorstehenden Ansprüche, wobei die erste Schalenkomponente eine Höhenabmessung von zwischen 55 cm und 81 cm definiert.

14. Gepäcksgegenstand gemäß einem der vorstehenden Ansprüche, ferner umfassend eine zweite Schalenkomponente (182), die an einer Trennlinie schwenkbar mit der ersten Schalenkomponente verbunden ist.

## Revendications

1. Article de bagagerie rigide (100) comprenant :
un premier composant de coque (180) formé au moins en partie par un stratifié (184), le stratifié comportant :
une couche de substrat (200) définissant une surface (204) et une première propriété de la matière ;
un film de support (188) ayant des première et deuxième surfaces opposées (206, 208), la première surface du film de support étant fixée à la surface de la couche de substrat ; et
une couche de matière (250) fixée à la deuxième surface du film de support et définissant une deuxième propriété de la matière, la deuxième propriété de la matière étant différente de la première propriété de la matière, et la couche de matière formant au moins un élément (252) faisant saillie depuis la surface de la couche de substrat ; et
dans lequel le film de support comporte un revêtement ou traitement améliorant l'adhérence du film de support à la couche de substrat et/ou la couche de matière.

2. Article de bagagerie de la revendication 1, dans lequel les première et deuxième propriétés de la matière sont des résistances à l'abrasion ou des niveaux de dureté des couches respectives.

3. Article de bagagerie de la revendication 2, dans lequel la couche de matière a une résistance à l'abrasion supérieure à la résistance à l'abrasion de la couche de substrat.

4. Article de bagagerie d'une quelconque revendication précédente, dans lequel la couche de matière est formée comme une feuille pleine ou au moins un élément individuel.

5. Article de bagagerie de la revendication 4, dans lequel une pluralité d'éléments individuels (252) forment un motif.

6. Article de bagagerie de la revendication 5, dans lequel chaque élément individuel est une nervure (270).

7. Article de bagagerie d'une quelconque revendication précédente, dans lequel :
la couche de substrat comporte du polypropylène ; et
la couche de matière extérieure comporte un polyuréthane thermodurci.

8. Article de bagagerie d'une quelconque revendication précédente, dans lequel la couche de substrat et la couche de matière définissent chacune au moins une dimension dans l'épaisseur, et dans lequel l'au moins une dimension dans l'épaisseur de la couche de substrat est supérieure à l'au moins une dimension dans l'épaisseur de la couche de matière.

9. Article de bagagerie de la revendication 8, dans lequel la dimension dans l'épaisseur de la couche de substrat représente entre 2 et 4 fois la dimension dans l'épaisseur de la couche de matière.

10. Article de bagagerie d'une quelconque revendication précédente, dans lequel le film de support comprend des première et deuxième couches (350, 352) liées ensemble pour se fixer à la couche de substrat et la couche de matière, respectivement.

11. Article de bagagerie de la revendication 10, dans lequel la première couche est formée à partir d'une matière en polypropylène, et dans lequel la deuxième couche est formée à partir d'une matière en polyuréthane.

12. Article de bagagerie d'une quelconque revendication précédente, dans lequel la couche de matière extérieure représente entre 5 % et 15 % du poids total du premier composant de coque.

13. Article de bagagerie d'une quelconque revendication précédente, dans lequel le premier composant de coque définit une dimension dans la hauteur comprise entre 55 cm et 81 cm.

14. Article de bagagerie d'une quelconque revendication précédente, comprenant en outre un deuxième composant de coque (182) relié avec faculté de pivotement au premier composant de coque au niveau d'une ligne de division.
